(19) Europäisches Patentamt
European Patent Office
Office européen des brevets

(11) **EP 2 172 337 A1**

(12) **EUROPEAN PATENT APPLICATION**
published in accordance with Art. 153(4) EPC

(43) Date of publication:
07.04.2010 Bulletin 2010/14

(21) Application number: 08791819.9

(22) Date of filing: 29.07.2008

(51) Int Cl.:
*B32B 27/30* (2006.01)    *C08L 51/04* (2006.01)

(86) International application number:
PCT/JP2008/063584

(87) International publication number:
WO 2009/017118 (05.02.2009 Gazette 2009/06)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 31.07.2007 JP 2007198426

(71) Applicant: Techno Polymer Co., Ltd.
Minato-ku
Tokyo 105-0021 (JP)

(72) Inventors:
• KAKUNO, Wataru
Tokyo 105-0021 (JP)
• WATANABE, Atsushi
Tokyo 105-0021 (JP)
• HASHIMOTO, Masanori
Tokyo 105-0021 (JP)

(74) Representative: Wilhelms · Kilian & Partner
Patentanwälte
Eduard-Schmid-Straße 2
81541 München (DE)

(54) **LAYERED PRODUCT**

(57)    A layered product is provided which is excellent in heat resistance, difficult to hydrolyze and excellent in weatherability, and has such flexibility that it can hardly crack even when folded, and further is prevented from curling, and thus is excellent in processability, productivity and handleability. The layered product comprises a base layer made of a thermoplastic resin (I) having a glass transition temperature of 120˚C or higher, the base layer being layered on at least one side thereof with a layer made of an aromatic vinyl resin (II) having a lower glass transition temperature than the thermoplastic resin (I). The aromatic vinyl resin (II) is preferably a rubber-reinforced aromatic vinyl resin which contains a rubber-like polymer (a) selected from ethylene-α-olefin rubbers, hydrogenated conjugated diene rubbers, acrylic rubbers, silicone rubbers and silicone/acrylic composite rubbers in an amount of 5-40 parts by mass. The difference in glass transition temperature between the thermoplastic resin (I) and the aromatic vinyl resin (II) is preferably 10˚C or more.

EP 2 172 337 A1

**Description**

TECHNICAL FIELD

The present invention relates to a layered product excellent in heat resistance, weatherability, hydrolytic resistance and flexibility, and also prevented from curling.

BACKGROUND ART

Recently, there is a growing demand for solar cells that have been noticed as energy supplying means alternative to petroleum which is a cause of global warming. With the increase in demand for solar cells, stable supply and cost reduction of parts such as back sheets for solar cells have been required, and also there is a growing demand for improving efficiency of solar cells. Further, durability in natural environment is also required for solar cells. Conventionally, as a film for parts of solar cells, for Example, polyester films have been used (Patent Document 1, 2 and 3).

Patent Document 1: Japanese Patent Laid-open No. 2007-70430
Patent Document 2: Japanese Patent Laid-open No. 2006-175764
Patent Document 3: Japanese Patent Laid-open No. 2006-306910

DISCLOSURE OF THE INVENTION

PROBLEMS TO BE SOLVED BY THE INVENTION

However, the polyester film is poor in hydrolytic resistance, and thus has a problem with long-term outdoor use which is affected by water.
On the other hand, styrene films are hard to absorb moisture, excellent in hydrolytic resistance, and good in optical properties such as transparency and gloss and electrical properties such as dielectric constant and insulation, but are still not sufficient in heat resistance, flexibility and the like.
The present invention aims at providing a layered product which is small in thermal contraction and excellent in heat resistance even when undergoes, for example, dynamic temperature history during drying or surface treatment of a film or sheet after printing or during another secondary process, is difficult to hydrolyze and excellent in weatherability even when used outside for a long time, is difficult to crack and excellent in flexibility even in a form of film or sheet, and is further prevented from curling and good in processability, productivity and handleability.

MEANS FOR SOLVING THE PROBLEM

As a result of intensive studies for solving the above problem, the present inventors have found that a layered product which is excellent in heat resistance, weatherability, hydrolytic resistance and flexibility and is also prevented from curling can be obtained by layering a base layer made of a thermoplastic resin (I) having a specific glass transition temperature with a layer made of an aromatic vinyl resin (II) having a lower glass transition temperature than the thermoplastic resin (I). Thus, the present invention has completed.
That is, the present invention is shown as follows.

1. A layered product which comprises a base layer made of a thermoplastic resin (I) having a glass transition temperature of 120˚C or higher, the base layer being layered on one side or both sides thereof with a layer made of an aromatic vinyl resin (II) having a lower glass transition temperature than the thermoplastic resin (I).
2. The layered product according to the above item 1, wherein said aromatic vinyl resin (II) comprises a rubber-reinforced aromatic vinyl resin (II-1) obtained by polymerization of a vinyl monomer (b) comprising an aromatic vinyl compound and optionally another monomer copolymerizable with the aromatic vinyl compound in a presence of a rubber-like polymer (a), and optionally comprises a (co)polymer (II-2) of a vinyl monomer (b), the content of the rubber-like polymer (a) being 5 to 40 parts by mass relative to 100 parts by mass of the aromatic vinyl resin (II).
3. The layered product according to the above item 2, wherein said rubber-like polymer (a) is at least one selected from the group consisting of conjugated diene rubbers, ethylene-α-olefin rubbers, hydrogenated conjugated diene rubbers, acrylic rubbers, silicone rubbers and silicone/acrylic composite rubbers.
4. The layered product according to any one of the above items 1 to 3, wherein said aromatic vinyl resin (II) comprises a repeating unit derived from a maleimide compound, the content of the repeating unit derived from a maleimide compound being 1 to 30 mass% relative to 100 mass% of the aromatic vinyl resin (II).

5. The layered product according to the above item 4, wherein said thermoplastic resin (I) comprises a rubber-reinforced vinyl resin (I-1) obtained by polymerization of a vinyl monomer (ii) in a presence of a rubber-like polymer (i) and optionally a (co) polymer (1-2) of a vinyl monomer (ii), the content of the rubber-like polymer (i) being 5 to 40 parts by mass relative to 100 parts by mass of the thermoplastic resin (I).

6. The layered product according to the above item 5, wherein the above rubber-like polymer (i) is at least one selected from the group consisting of conjugated diene rubbers, ethylene-α-olefin rubbers, hydrogenated conjugated-diene rubbers, acrylic rubbers, silicone rubbers and silicone/acrylic composite rubbers.

7. The layered product according to the above item 6, wherein said thermoplastic resin (I) comprises a repeating unit derived from a maleimide compound, the content of the repeating unit derived from a maleimide compound being 1-30 mass% relative to 100 mass% of the thermoplastic resin (I).

8. The layered product according to any one of the above items 1 to 7, wherein said thermoplastic resin (I) has a glass transition temperature (Tg (I)) of 120-210°C, and said aromatic vinyl resin (II) has a glass transition temperature (Tg (II)) satisfying the following equation (1).

$$(Tg (I) - Tg (II)) \geqq 10°C \cdots (1)$$

9. The layered product according to any one of the above items 1 to 8, wherein said base layer (B) made of the thermoplastic resin (I) is layered on both sides thereof with a layer ((A) and (C)) made of the aromatic vinyl resin (II) .

10. The layered product according to the above item 9, wherein a thickness ($H_A$) of the layer (A), a thickness ($H_B$) of the layer (B) and a thickness ($H_C$) of the layer (C) satisfy the following equations (2) and (3).

$$0.5 \leqq H_A/H_C \leqq 1.5 \cdots (2)$$

$$0.4 \leqq (H_A+H_C)/H_B \leqq 2.4 \cdots (3)$$

11. The layered product according to the above item 10, which shows a dimensional, change (s) represented by 1%$\geqq$s $\geqq$-1%, when left at 150°C for 30 minutes.

12. The layered product according to any one of the above items 1 to 11, which is in a form of sheet or film.

## EFFECT OF THE INVENTION

The layered product of the present invention comprises a base layer made of a thermoplastic resin (I) having a glass transition temperature of 120°C or higher, onto which a layer made of an aromatic vinyl resin (II) having a lower glass transition temperature than the above thermoplastic resin (I) is laminated. Thus, it is small in thermal contraction and excellent in heat resistance even when undergoes a dynamic temperature history during drying or surface treatment of a film after printing or another secondary process, is difficult to hydrolyze and excellent in weatherability even when used outside for a long time, is difficult to crack and excellent in flexibility even in the form of a film or sheet, and further prevented from curling and good in processability, productivity and handleability, and thus is extremely useful as a film or sheet which requires heat resistance, weatherability, hydrolytic resistance and the like, for example, a back sheet for solar cells.

## BEST MODE FOR CARRYING OUT THE INVENTION

Hereinafter, the present invention is described in detail. In this specification, the term "(co)polymer" means homopolymer and copolymer, the term "(meth)acryl" means acryl and/or methacryl, and the term "(meth) acrylate" means acrylate and/or methacrylate.

The thermoplastic resin (I) used in the present invention (hereinafter, also referred to as "Component (I)") is not particularly limited as long as it has a glass transition temperature of 120°C or higher, but include vinyl resins (for example, styrene resins, rubber-reinforced styrene resins, acrylonotrile/styrene resins, other (co)polymers of aromatic vinyl compounds, and the like), polyolefin resins (for example, polyethylene resins, polypropylene resins, ethylene-α-olefin resins, and the like), polyvinyl chloride resins, polyvinylidene chloride resins, polyvinyl acetate resins, saturated polyester resins, polycarbonate resins, acrylic resins (for example, (co)polymers of (meth)acrylate compounds and the like) fluorine resins, ethylene/vinyl acetate resins and the like. These can be used alone or in combination of two or more.

The thermoplastic resin (I) has a glass transition temperature of 120˚C or higher, preferably 120-220˚C, more preferably 130-190˚C, furthermore preferably 140-170˚C and particularly preferably 145-160˚C. When the glass transition temperature is less than 120˚C, heat resistance is not sufficient.

Examples of the thermoplastic resin (I) typically include a vinyl resin (I'), that is, a rubber-reinforced vinyl resin (I-1) obtained by polymerization of a vinyl monomer (ii) in the presence of a rubber-like polymer (i) and/or a (co)polymer (I-2) of the vinyl monomer (ii).

The latter (co) polymer (1-2) can be obtained by polymerization of the vinyl monomer (ii) in the absence of the rubber-like polymer (i). The rubber-reinforced vinyl resin (I-1) usually includes copolymers in which the above vinyl monomer (ii) is graft-copolymerized onto the rubber-like polymer (i) and an ungrafted component which is made from the vinyl monomer (ii) but is not grafted onto the rubber-like polymer (i) (one which is of the same type as the above (co)polymer (I-2)).

Among these, a preferable thermoplastic resin (I) is a rubber-reinforced aromatic vinyl resin (I-1') obtained by polymerization of an aromatic vinyl monomer (ii') comprising an aromatic vinyl compound and optionally another monomer copolymerizable with the aromatic vinyl compound in the presence of a rubber-like polymer (i), and/or a (co)polymer (I-2') of the aromatic vinyl monomer (ii').

The thermoplastic resin (I) of the present invention preferably contains at least one kind of the rubber-reinforced vinyl resin (I-1) from the viewpoint of impact resistance and flexibility, and may contain the (co)polymer (I-2), if required. The content of the rubber-like polymer (i) is preferably 5-40 parts by mass, more preferably 8-30 parts by mass, furthermore preferably 10-20 parts by mass, and particularly preferably 12-18 parts by mass relative to 100 parts by mass of Component (I). When the content of the rubber-like polymer (i) exceeds 40 parts by mass, heat resistance is not sufficient, and processing into a film or sheet may be difficult. On the other hand, when the content of the rubber-like polymer (i) is less than 5 parts by mass, impact resistance and flexibility may not be sufficient.

The vinyl resin (I') preferably comprises a repeating unit derived from a maleimide compound from the viewpoint of heat resistance. The content of the repeating unit derived from the maleimide compound is usually preferably 0-30 mass%, more preferably 1-30 mass%, furthermore preferably 5-25 mass% and particularly preferably 10-25 mass% relative to 100 mass% of the vinyl resin (I'), Also, the repeating unit derived from the maleimide compound may be originated from the rubber-reinforced vinyl resin (I-1) or may be originated from the (co)polymer (I-2). The glass transition temperature of the vinyl resin (I') can be adjusted by the content of the repeating unit derived from the maleimide compound as described later, and the (co)polymer (I-2) containing the repeating unit derived from the maleimide compound is advantageous for preparing the vinyl resin (I') provided with a desired glass transition temperature.

The above rubber-like polymer (i) includes but is not particularly limited to conjugated-diene rubbers such as polybutadiene, butadiene/styrene random copolymers, butadiene/styrene block polymers, butadiene/acrylonitrile copolymers and the hydrogenated compound thereof (that is, hydrogenated conjugated diene rubbers) and noun-diene rubbers such as ethylene-α-olefin rubbers, acrylic rubbers, silicone rubbers and silicone/acrylic composite rubbers, and these can be used alone or in combination of two or more.

Among these, ethylene-α-olefin rubbers (i-1), hydrogenated conjugated diene rubbers (i-2), acrylic rubbers (i-3), silicone rubbers (i-4) and silicone/acrylic composite rubbers (i-5) are preferable from the viewpoint of weatherability. Among them, acrylic rubbers (i-3), silicone rubbers (i-4) and silicone/acrylic composite rubbers (i-5) are more preferable, and silicone/acrylic composite rubbers (i-5) are preferable from the viewpoint of flexibility. These can be used alone or in combination of two or more.

Examples of ethylene-α-olefin rubbers (i-1) include ethylene-α-olefin copolymers and ethylene-α-olefin-non-conjugated diene copolymers. Examples of the α-olefin constituting the ethylene-α-olefin rubber include an α-olefin with 3-20 carbon atoms, and concretely, propylene, 1-butene, 1-pentene, 1-hexene, 4-methyl-1-pentene, 1-heptene, 1-octene, 1-decent, 1-dodecene, 1-hexadecene and 1-eicocene. These α-olefins can be used alone or in combination of two or more. The number of carbon atoms of the α-olefin is preferably 3-20, more preferably 3-12, and furthermore preferably 3-8. When the number of carbon atoms exceeds 20, copolymerizability is lowered, and surface appearance of molded articles may become insufficient. As a typical ethylene-α-olefin rubber (i-1), ethylene/propylene copolymers, ethylene/propylene/non-conjugated diene copolymers, ethylene/1-butene copolymers and ethylene/1-butene/non-conjugated diene copolymers are included. The mass ratio of ethylene/α-olefin is preferably 5-95/95-5, more preferably 50-90/50-10, furthermore preferably 60-88/40-12 and particularly preferably 70-85/30-15. When the mass ratio of α-olefin exceeds 95, weatherability is not sufficient. On the other hand, when it is less than 5, rubber elasticity of the rubber-like polymer is not sufficient, and thus flexibility may not be sufficient.

The non-conjugated diene includes alkenyl norbornenes, cyclic dienes and aliphatic dienes, and preferably includes 5-ethylidene-2-norbornene and dicyclopentadiene. These non-conjugated dienes can be used alone or in combination of two or more. The ratio of the non-conjugated diene is preferably 0-30 mass%, more preferably 0-20 mass% and furthermore preferably 0-10 mass% relative to the total amount of the ethylene-α-olefin rubbers (i-1). When the ratio of the non-conjugated diene exceeds 30 mass%, appearance of molded articles and weatherability may be insufficient. The amount of unsaturated groups in the ethylene-$\alpha$-olefin rubber (i-1) is preferably in a range of 4-40 in terms of iodine value.

Mooney viscosity of the ethylene-$\alpha$-olefin rubber (i-1) ($ML_{1+4}$, 100˚C; according to JIS K6300) is preferably 5-80, more preferably 10-65 and furthermore preferably 15-45. When the Mooney viscosity of the Component (i-1) exceeds 80, polymerization may become difficult, and when the Moony viscosity of the Component is less than 5, impact resistance and flexibility may not be sufficient.

The hydrogenated conjugated diene rubber (i-2) includes, for example, hydrogenated products of the conjugated diene block copolymer having the following structure. That is, a block copolymer comprising two or more of a polymer block A composed of an aromatic vinyl compound unit, a polymer block B in which 95 mol% or more of the double bonds of a polymer made from a conjugated diene compound unit with a 1,2-vinyl bond content of more than 25 mol% is hydrogenated, a polymer block C in which 95 mol% or more of the double bonds of a polymer made from a conjugated diene compound unit with a 1,2-vinyl bond content of not more than 25 mol% is hydrogenated, and a polymer block D in which 95 mol% or more of the double bonds of a copolymer of an aromatic vinyl compound unit with a conjugated diene compound unit is hydrogenated.

Examples of aromatic vinyl compounds used for the production of the above polymer block A include styrene, $\alpha$-methyl styrene, other methyl styrenes, vinyl xylene, monochlorostyrene, dichlorostyrene, monobromostyrene, dibromostyrene, fluorostyrene, p-t-butylstyrene, ethylstyrene and vinylnaphthalene, and these can be used alone or in combination or two or more. Above all, preferable one is styrene. The ratio of a polymer block A in the above block copolymer is preferably 0-65 mass% and further preferably 10-40 mass%. When the polymer block A exceeds 65 mass%, impact resistance may not be sufficient.

The above polymer block B, C and D can be obtained by hydrogenating a polymer of a conjugated diene compound. The conjugated diene compound used for the production of the above polymer block B, C and D include, for example, 1,3-butadiene, isoprene, 1,3-pentadiene and chloroprene, but in order to obtain the hydrogenated diene rubbers which can be utilized industrially and is excellent in property, 1,3-butadiene and isoprene are preferable. These can be used alone or in combination of two or more. The aromatic vinyl compound used for the production of the above polymer block D includes the same as the aromatic vinyl compound used for the production of the above polymer block A, and these can be used alone or in combination of two or more. Above all, preferable one is styrene.

The hydrogenation ratio of the above polymer blocks B, C and D is 95 mol% or more, and preferably 96 mol% or more. When it is less than 95 mol%, gelation occurs during polymerization, and thus polymerization may not be stably performed. The 1,2-vinyl bond content of the polymer block B is preferably more than 25 mol% and not more than 90 mol%, and further preferably 30-80 mol%. When the 1,2-vinyl bond content of the polymer block B is not more than 25 mol%, rubbery properties are lost so that impact resistance may be insufficient, and when it exceeds 90 mol%, chemical resistance may be insufficient-The 1,2-vinyl bond content of the polymer block C is preferably not more than 25 mol%, and further preferably not more than 20 mol%. When the 1,2-vinyl bond content of the polymer block C exceeds 25 mol%, scratch resistance and sliding properties may not be exhibited sufficiently. The 1,2-vinyl bond content of the polymer block D is preferably 25-90 mol%, and further preferably 30-80 mol%. When the 1,2-vinyl bond content of the polymer block D is less than 25 mol%, rubbery properties are lost so that impact resistance may be insufficient, and when it exceeds 90 mol%, chemical resistance may be obtained sufficiently. Also, the content of the aromatic vinyl compound of the polymer block D is preferably not more than 25 mass% and further preferably not more than 20 mass%. When the content of an aromatic vinyl compound of the polymer block D exceeds 25 mass%, rubbery properties are lost so that impact resistance may be insufficient.

The molecular structure of the above block copolymer may be branched, radial or in combination of these, and the block structure thereof may be diblock, triblock or multiblock or a combination of these. Examples are block copolymers represented by A-(B-A)$_n$, (A-B)$_n$, A-(B-C)$_n$, C-(B-C)$_n$, (B-C)$_n$, A-(D-A)$_n$, (A-D)$_n$, A-(D-C)$_n$, C-(D-C)$_n$, (D-C)$_n$, A-(B-C-D)$_n$ or (A-B-C-D)$_n$ (where n is an integer of not less than 1), and preferably a block copolymer having a structure of A-B-A, A-B-A-B, A-B-C, A-D-C or C-B-C.

The weight average molecular weight (Mw) of the above hydrogenated conjugated diene rubber (i-2) is preferably 10,000-1,000,000, further preferably 30,000-800,000, and more preferably 50,000-500,000. When Mw is less than 10,000, flexibility may be insufficient, and on the other hand, when it exceeds 1,000,000, polymerization may be difficult.

The acrylic rubber (i-3) is a polymer of an alkyl acrylate having an alkyl group with 2-8 carbon atoms. Concrete examples of the alkyl acrylate include ethyl acrylate, propyl acrylate, n-butyl acrylate, isobutyl acrylate, hexyl acrylate, n-octyl acrylate and 2-ethylhexyl acrylate. These can be used alone or in combination of two or more. A preferable alkyl acrylate is (n, i)-butyl acrylate or 2-ethylhexyl acrylate. A part of the alkyl acrylate can be substituted by another copolymerizable monomer it an amount of 20 mass% at maximum. Another monomer as above includes, for example, vinylchloride, vinylidene chloride, acrylonitrile, vinylester, alkyl methacrylate, methacrylic acid, acrylic acid and styrene.

It is preferable that kinds and amounts of monomers to be copolymerized for the acrylic rubber (i-3) are selected so that the rubber-like polymer has a glass transition temperature of not more than -10˚C. Also, it is preferable to appropriately copolymerize a crosslinkable monomer it the acrylic rubber (i-3), and the amount of the crosslinkable monomer to be used is usually 0-10 mass%, preferably 0.01-10 mass% and further preferably 0.1-5 mass% as a ratio relative to the total amount of the acrylic rubber (i-3).

Concrete examples of the crosslinkable monomer include mono or polyethylene glycol diacrylates such as ethylene glycol diacrylate, diethylene glycol diacrylate, triethylene glycol diacrylate, tetraethylene glycol diacrylate, mono or polyethylene glycol dimethacrylates such as ethylene glycol dimethacrylate, diethylene glycol dimethacrylate, triethylene glycol dimethacrylate, tetraethylene glycol dimethacrylate, di or triallyl compounds such as divinylbenzene, diallylphthalate, diallylmaleate, diallylsuccinate and triallyltriazine, allyl compounds such as allylmethacrylate and allylacrylate, and conjugated diene compounds such as 1,3-butadiene. The above acrylic rubber (i-3) is produced by known polymerization methods, and a preferable polymerization method is emulsion polymerization.

As the silicone rubber (i-4), all which can be obtained by known polymerization methods can be used, and polyorganosiloxane rubber-like polymer latex obtained in a form of latex by emulsion polymerization is preferable from the view point of easiness of graft polymerization.

The latex of the polyorganosiloxane rubber-like polymer can be obtained by the known method described in, for example, US 2,891,920 and 3,294, 725 specifications. For example, a method in which an organosiloxane and water were sheared and mixed and then condensed in the presence of a sulfonic acid emulsifier such as alkylbenzene sulfonic acid and alkylsulfonic acid using a homomixer or ultrasonic mixer. The alkylbenzene sulfonic acid is suitable because it acts as an emulsifier for the organosiloxane as well as a polymerisation initiator. In this instance, it is preferable to use an alkylbenzene sulfonic acid metal salt or alkylsulfonic acid metal salt in combination, because they are effective for maintaining polymers to be stable during graft polymerization. If necessary, a grafting agent or crosslinking agent may be condensed together to an extent that does not impair the aimed property of the present invention.

The organosiloxane to be used is, for example, one having a structure unit represented by the general formula $R_m SiO_{(4-m)/2}$ (wherein R is a substituted or unsubstituted monovalent hydrocarbon group, and m indicates an integer of 0 to 3), and has a linear, branched or cyclic structure, and is preferably an organosiloxane having a cyclic structure The substituted or unsubstituted monovalent hydrocarbon group of the organosiloxane includes, for example, methyl group, ethyl group, propyl group, phenyl group and hydrocarbon groups substituted with a cyano group or the like.

Concrete examples of the organosiloxane include cyclic compounds such as hexamethylcyclotrisiloxane, octamethylcyclotetrasiloxane, decamethylcyclopentasiloxane, dodecamethylcyclohexasiloxane, trimethyltriphenylcyclotrisiloxane, and a linear or branched organosiloxane. These can be used alone or in combination of two or more.

The organosiloxane may be a polyorganosiloxane that is previously condensed to have a polystyrene-equivalent weight-average molecular weight of, for example, about 500-10,000. Also, when the organosiloxane is a polyorganosiloxane, a molecular chain terminal thereof may be blocked, for example, by hydroxyl group, alkoxy group, trimethylsilyl group, dimethylvinylsilyl group, methylphenylvinylsilyl group and methyldiphenylsilyl group.

As the grafting agent, for example, a compound having both unsaturated group and alkoxysilyl group can be used. Concrete examples of such a compound include p-vinylphenylmethyldimethoxysilane, 1-(m-vinylphenyl)methyldimethylisopropoxysilane, 2-(p-vinylphenyl)ethylmethyldimethoxysilane, 3-(p-vinylphenoxy)propylmethyldiethoxysilane, 3-(p-vinylbenzoyloxy)propylmethyldimethoxysilane, 1-(o-vinylphenyl)-1,1,2-trimethyl-2,2-dimethoxydlsilane, 1-(p-vinylphenyl)-1,1-diphenyl-3-ethyl-3,3-diethoxydisiloxane, m-vinylphenyl-[3-(triethoxysilyl)propyl]diphenylsilane, [3-(p-isopropenylbenzoylamino)propyl]phenyldipropoxysilane, 2-(m-vinylphenyl)ethylmethyldirnethozysilane, 2-(o-vinylphenyl)ethylmethyldimethoxysilane, 1-(p-vinylphenyl)ethylmethyldimethoxysilane, 1-(m-vinylphenyl)ethylmethyldinlethoxysilane, 1-(o-vinylphenyl)ethylmethyldimethoxysilane, and a mixture of these. Of these, p-vinylphenylmethyldimethoxysilane, 2-(p-vlnylphenyl)ethylmethyldimethoxysilane, and 3-(p-vinylbenzoyloxy)propylmethyldimethoxysilane are preferable, and p-vinylphenylmethyldimethoxysilane is further preferable.

The ratio of the grafting agent to be used is usually 0-10 parts by mass, preferably 0.2-10 parts by mass and further preferably 0.5-5 parts by mass relative to 100 parts by mass of the total amount of the organosiloxane, grafting agent and crosslinking agent. When the amount of the grafting agent to be used is too much, the molecular weight of the grafted vinyl polymer is lowered, and as a result, sufficient impact resistant cannot be obtained. In addition, oxidative degradation easily proceeds at double bonds of the grafted polyorganosiloxane rubber-like polymer, and thus a graft copolymer with good weatherability cannot be obtained.

An average particle diameter of particles of the polyorganosiloxane rubber-like polymer latex is usually not more than 0.5 $\mu$m, preferably not more than 0.4 $\mu$\m, and further preferably 0.05-0.4 $\mu$m. The average particle diameter can be easily controlled by amounts of the emulsifier and water, a degree of dispersion upon mixing with the homomixer or ultrasonic mixer, or a way of charging the organosiloxane. When the average particle diameter of latex particles exceeds 0.5 $\mu$m, gloss is inferior.

The polystyrene-equivalent weight-average molecular weight of the polyorganosiloxane rubber-like polymer obtained as above is usually 30,000-1,000,000, and preferably 50,000-300,000. When the weight average molecular weight is less than 30,000, flexibility may not be obtained sufficiently. On the other hand, when the weight-average molecular weight exceeds 1,000,000, entanglement within rubber polymer chains becomes strong, and rubber elasticity is lowered, and thus flexibility is lowered, or graft particles are hardly melted, and appearance may be impaired.

The weight-average molecular weight can be easily controlled by changing temperature and time of condensation polymerization during preparation of polyorganosiloxane rubber-like polymers. That is, the lower the temperature of condensation polymerization is and/or the longer the cooling time is, the higher the molecular weight of the polymer is. Also, the polymer can be made high in molecular weight by adding a small amount of a crosslinking agent.

Meanwhile, the molecular chain terminal of the polyorganosiloxane rubber-like polymer may be blocked, for example, by hydroxyl group, alkoxy group, trimethylsilyl group, dimethylvinylsilyl group, methylphenylvinylsilyl group or methyldiphenylsilyl group.

The amount of the emulsifier to be used is usually 0.1-5 parts by mass and preferably 0.3-3 parts by mass relative to 100 parts by mass of the total of the organosiloxane, grafting agent and crosslinking agent. The amount of water to be used in this instance is usually 100-500 parts by mass and preferably 200-400 parts by mass relative to 100 parts by mass of the total of the organosiloxane, grafting agent and crosslinking agent. The condensation temperature is usually 5-100°C.

During production of the polyorganosiloxane rubber-like polymer, a crosslinking agent can be added as the third component in order to improve impact resistance of the resulting graft copolymer. The crosslinking agent includes, for example, trifunctional crosslinking agents such as methyl trimethoxysilane, phenyl trimethoxysilane and ethyl triethoxysilane, and tetrafunctional crosslinking agents such as tetraethoxysilane. These can be used in combination of two or more. As these crosslinking agents, crosslinked pre-polymers that are previously condensation-polymerized can be used. The addition amount of the crosslinking agent is usually not more than 10 parts by mass, preferably not more than 5 parts by mass and further preferably 0.01-5 parts by mass relative to 100 parts by mass of the total amount of the organosiloxane, grafting agent and crosslinking agent. When the addition amount of the above crosslinking agent exceeds 10 parts by mass, suppleness of polyorganosiloxane rubber-like polymers may be impaired so that flexibility may be lowered.

The silicone/acrylic composite rubber (i-5) means a rubber-like polymer comprising a polyorganosiloxane rubber and a polyalkyl (meth)acrylate rubber. A preferable silicone/acrylic composite rubber (i-5) is a composite rubber having a structure in which a polyorganosiloxane rubber and a polyalkyl (meth) acrylate rubber are entangled with each other so as to be inseparable.

The polyalkyl (meth)acrylate rubber includes, for example, one which can be obtained by copolymerizing an alkyl (meth)acrylate (monomer) such as methyl acrylate, ethyl acrylate, n-propyl acrylate, n-butyl acrylate, 2-ethylhexyl acrylate, ethoxyethoxyethyl acrylate, methoxy tripropylene glycol acrylate, 4-hydrozybutyl acrylate, lauryl methacrylate and stearyl methacrylate. These alkyl (meth)acrylates can be used alone or in combination of two or more.

The alkyl (meth)acrylate monomer may further comprise various vinyl monomers including aromatic vinyl compounds such as styrene, $\alpha$-methyl styrene and vinyl toluene; vinyl cyanide compounds such as acrylonitrile and methacrylonitrile; silicones modified with methacrylic acids; and fluorine-containing vinyl compounds in a range of not more than 30 mass% as comonomers.

The above polyalkyl (meth)acrylate rubber is preferably a copolymer having two or more glass transition temperatures. Such a polyalkyl (meth)acrylate rubber is preferable in order to exhibit flexibility of layered products.

As the above polyorganosiloxane rubber, can used one resulting from copolymerization of an organosiloxane. The above organosiloxane includes a variety of reduced products with 3- or more membered ring, and preferably includes, for example, hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane and octaphenylcyclotetrasiloxane. These organosiloxanes can be used alone or in combination of two or more. The amount of these organosiloxanes to be used is preferably not less than 50 mass%, and more preferably not less than 70 mass% in the polyorganosiloxane rubber components.

The vinyl monomer (ii) in the present invention typically includes aromatic vinyl compounds and vinyl cyanide compounds, and is preferably one comprising an aromatic vinyl compound, and more preferably one comprising both an aromatic vinyl compound and a vinyl cyanide compound.

The aromatic vinyl compounds include, for example, styrene, $\alpha$-methyl styrene, other methyl styrene, vinyl toluene, vinyl xylene, ethyl styrene, dimethyl styrene, p-t-butyl styrene, vinyl naphtalene, methoxy styrene, monobromo styrene, dibromo styrene, tribromo styrene and fluorostyrene. Of these, styrene and $\alpha$-methyl styrene are preferable. These aromatic vinyl compounds can be used alone or in combination of two or more.

The vinyl cyanide compounds include acrylonitrile, methacrylonitrile and $\alpha$-chloro(meth)acrylonitrile. Of these, acrylonitrile is preferable. These vinyl cyanide compounds can be used alone or in combination of two or more. The ratio of the aromatic vinyl compound and the vinyl cyanide compound to be used is preferably 5-95 mass% and 5-95 mass%, more preferably 50-95 mass% and 5-50 mass%, further preferably 60-95 mass% and 5-40 mass% and particularly preferably 65-85 mass% and 15-35 mass% respectively, provided that the total of the aromatic vinyl compound and the vinyl cyanide compound is 100 mass%.

The vinyl monomer (ii) can comprise the aromatic vinyl compound and the vinyl cyanide compound as well as another compound copolymerizable with these. Such another compound includes (meth)acrylates, maleimide compounds, functional group-containing unsaturated compounds (for example, unsaturated acids, epoxy group-containing unsaturated compounds, hydroxyl group-containing unsaturated compounds, oxazoline group-containing unsaturated compounds and acid anhydride group-containing unsaturated compounds). These can be used alone or in combination of two or more. The amount of such another compound to be used is preferably 0-70 mass%, more preferably 0-55 mass% and further preferably 0-45 mass%, provided that the total of the vinyl monomer (ii) is 100 mass%.

The (meth)acrylate includes, for example, methyl (meth)acrylate, ethyl (meth)acrylate, n-propyl (meth)acrylate, isopropyl (meth)acrylate, n-butyl (meth)acrylate and isobutyl (meth) acrylate. These can be used alone or in combination of two or more. Of these, methyl methacrylate is preferable.

The unsaturated acid includes, for example, acrylic acid, methacrylic acid, itaconic acid and maleic acid. These can be used alone or in combination of two or more.

The maleimide compound includes, for example, maleimide, N-methylmaleimide, N-butylmaleimide, N-phenylmaleimide and N-cyclohexylmaleimide. These can be used alone or in combination of two more. In order to introduce a repeating unit derived from a maleimide compound into a copolymerized resin, maleic anhydride is first (co)polymerized, and then imidation may be performed. Containing a maleimide compound as another copolymerizable compound is preferable from the viewpoint of improving heat resistance of the thermoplastic resin (I).

The content of the maleimide compound is usually preferably 0-30 mass%, more preferably 1-30 mass%, further preferably 5-25 mass% and particularly preferably 15-25 mass% as the repeating unit derived from the maleimide compound, provided the above thermoplastic resin (I) is 100 mass%. When the repeating unit derived from the maleimide compound is less than 1 mass%, heat resistance may be insufficient. On the other hand, when it exceeds 30 mass%, flexibility may be insufficient.

The epoxy group-containing unsaturated compound includes, for example, glycidyl acrylate, glycidyl methacrylate and allyl glycidyl ether, and these can be used alone or in combination of two or more.

The hydroxyl group-containing unsaturated compound includes, for example, 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl acrylate, 2-hydroxyethyl methacrylate and hydroxystyrene. These can be used alone or in combination of two or more.

The oxazoline group-containing unsaturated compound includes, for example, vinyl oxazolines. These can be used alone or in combination of two or more.

The acid anhydride group-containing unsaturated compound includes, for example, maleic anhydride, itaconic anhydride and citraconic anhydride. These can be used alone or in combination of two or more.

As the above vinyl monomer (ii), one which is mainly composed of an aromatic vinyl compound and a vinyl cyanide compound is preferable, and the total amount of these compounds is preferably 30-100 mass%, more preferably 45-100 mass% and furthermore preferably 55-100 mass% relative to the total amount of the vinyl monomer (ii). The ratio of an aromatic vinyl compound and an vinyl cyanide compound to be used is preferably 5-95 mass% and 5-95 mass%, more preferably 50-95 mass% and 5-50 mass%, further preferably 60-95 mass% and 5-40 mass% and particularly preferably 65-85 mass% and 15-35 mass% respectively, provided that the total of these is 100 mass%.

According to the preferable embodiment of the present invention, as the thermoplastic resin (I), is used a rubber-reinforced aromatic vinyl resin which comprises a rubber-reinforced aromatic vinyl resin (I'-1) obtained by polymerization of a vinyl monomer (ii) in the presence of a rubber-like polymer (i) selected from the group consisting of acrylic rubbers (i-3), silicone rubbers (i-4) and silicone/acrylic composite rubbers (i-5) and/or optionally a (co)polymer (I-2) of a vinyl monomer (ii). Of these, preferable are a silicone/acrylic composite rubber-reinforced aromatic vinyl resin using a silicone/acrylic composite rubber (i-5) as the rubber-like polymer (i), and a mixture of a silicone rubber-reinforced aromatic vinyl resin using a silicone rubber (i-4) as the rubber-like polymer (i) and an acrylic rubber-reinforced aromatic vinyl resin using an acrylic rubber (i-3) as the rubber-like polymer (i), and particularly preferable is the silicone/acrylic composite rubber-reinforced aromatic vinyl resin.

The rubber-reinforced vinyl resin (I-1) can be obtained by known polymerization methods such as emulsion polymerization, suspension polymerization, solution polymerization, bulk polymerization and polymerization methods of combination of these. When a rubber-like polymer (i) is a silicone/acrylic composite rubber (i-5) having a structure in which a polyorganosiloxane rubber and a polyalkyl(meth)acrylate rubber are entangled with each other so as to be inseparable, it can be produced by known methods such as JP-A-H04-239010 and JP-B-2137934. As such a silicone/ acrylic composite rubber graft copolymer, for example, "METABLEN SX-006 (trade name)" manufactured by MITSUBISHI RAYON CO., LTD. is commercially available.

The graft ratio of the rubber-reinforced vinyl resin (I-1) is preferably 20-170%, more preferably 50-170% and further preferably 50-150%. When the graft ratio is too low, flexibility may be insufficient. When it is too high, viscosity of the thermoplastic resin (I) becomes high so that a thin product may be difficult to make.

The graft ratio can be determined by the following equation (4).

$$\text{Graft ratio (mass\%)} = \{(S - T) / T\} \times 100 \quad \cdots (4)$$

In the above equation, S is the mass (g) of insoluble matter obtained by adding 1 g of the rubber-reinforced vinyl resin (I-1) into 20 ml of acetone (but acetonitrile when an acrylic rubber is used), shaking the mixture for 2 hours by a shaker under the temperature of 25°C, and then centrifuging the mixture by a centrifuge (at a rotation speed of 23,000 rpm) for 60 minutes under the temperature of 5°C to separate the insoluble matter from soluble matter, and T is the mass (g) of the rubber-like polymer contained in 1 g of the rubber-reinforced vinyl resin (1-1). The mass of the rubber-like polymer can be obtained by a method of calculating from polymerization prescription and polymerization conversion, a method of determining from infrared absorption spectrum (IR) and the like.

Meanwhile, the graft ratio can be adjusted by appropriately selecting, for example, kind and amount of a chain transfer agent used in the production of the rubber-reinforced vinyl resin (I-1), kind and amount of a polymerization initiator, method of addition and duration of addition of monomer components during polymerization, and polymerization temperature.

The limiting viscosity [η] (measured at 30°C in methyl ethyl ketone) of the soluble matter in acetone (but acetonitrile when acrylic rubber is used) of the rubber-reinforced resin (I-1) is preferably 0.1 to 2.5 dl/g, more preferably 0.2 to 1.5 dl/g, and further preferably 0.25 to 1.2 dl/g. It is preferable that the limiting viscosity is within this range from the viewpoint of processability of a film or sheet and thickness accuracy of layered products.

The limiting viscosity [η] of the soluble matter in acetone (but acetonitrile when acrylic rubber is used) of the rubber-reinforced resin (I-1) is measured by the following method. First, the soluble matter in acetone (but acetonitrile when acrylic rubber is used) of the rubber-reinforced resin (I-1) is dissolved in methyl ethyl ketone to make five samples different in concentration. Then, the limiting viscosity [η] is obtained from the results of a reduced viscosity measured at each concentration at 30°C using the Ubbelohde viscometer tube. The unit is dl/g.

The limiting viscosity [η] can be adjusted by appropriately selecting, for example, kind and amount of a chain transfer agent used in the production of the rubber-reinforced vinyl resin (I-1), kind and amount of a polymerization initiator, method of addition and duration of addition of monomer components during polymerisation, and polymerization temperature. Also, it can be adjusted by appropriately selecting and blending (co)polymers (I-2) different in limiting viscosity [η], The limiting viscosity [η] of the (co)polymer (I-2) can be measured by the method. First, the (co)polymer is the following method. First, the (co)polymer (I-2) is dissolved in methyl ethyl ketone to make five samples different in concentration. Then, the limiting viscosity [η] is obtained from the results of a reduced viscosity measured at each concentration at 30°C using the Ubbelohde viscometer tube. The unit is dl/g.

The thermoplastic resin (I) may be pelletized by previously blending required amounts of the respective components, mixing the blend in a Henschel mixer or the like, and then melt-kneading it in an extruder, or may be processed into a film or sheet by directly supplying the respective components to a film or sheet forming machine. In this instance, antioxidants, ultraviolet absorbents, weather resistant agents, anti-aging agents, fillers, antistatic agents, flame retardants, antifogging agents, slipping agents, antibacterial agents, fungicides, tackifiers, plasticizers, coloring agents, graphite, carbon black, carbon nanotube, and pigments (including a pigment to which functionality such as an infrared absorbing or reflecting property is imparted) can be added to the thermoplastic resin (I) in an amount which does not impair the object of the present invention.

The aromatic vinyl resin (II) (hereinafter referred to as "Component (II)") used in the present invention is not particularly limited as long as it has a lower glass transition temperature than the thermoplastic resin (I) of the base layer, and is typically a rubber-reinforced aromatic vinyl resin composition (II-1) obtained by polymerization of a vinyl monomer (b) comprising an aromatic vinyl compound and optionally another monomer copolymerizable with the aromatic vinyl compound in the presence of a rubber-like polymer (a), and/or a (co)polymer (II-2) of the vinyl monomer (b). The latter (co)polymer (II-2) can be obtained by polymerization of the vinyl monomer (b) in the absence of a rubber-like polymer (a). The rubber-reinforced aromatic vinyl resin (II-1) usually includes copolymers in which the above vinyl monomer (b) is graft-copolymerized onto the rubber-like polymer (a) and an ungrafted component which is made from the vinyl monomer (b) but is not grafted onto the rubber-like polymer (one which is of the same type as the above (co)polymer (II-2)).

The Component (II) of the present invention preferably comprises at least one kind of the rubber-reinforced aromatic vinyl resin (II-1) from the viewpoint of impact resistance and flexibility, and may contain the (co)polymer (II-2), if required. The content of the rubber-like polymer (a) is preferably 5-40 parts by mass, more preferably 8-30 parts by mass, further preferably 10-20 parts mass and particularly preferably 12-18 parts by mass relative to 100 parts by mass of the Component (II). When the content of the rubber-like polymer (a) exceeds 40 parts by mass, heat resistance is insufficient and film processing may be difficult. On the other hand, when the content of the rubber-like polymer (a) is less than 5 parts by mass, flexibility may be insufficient.

As the rubber-like polymer (a), can be used one mentioned as the rubber-like polymer (i), and the preferable rubber-like polymer (a) is also the same as the rubber-like polymer (i). However, in a layered product of the present invention, the rubber-like polymer (a) used in the aromatic vinyl resin (II) may be the same as or different from the rubber-like polymer (i) used in the thermoplastic resin (I).

As the vinyl monomer (b), can be used one mentioned as the vinyl monomer (ii), and the preferable vinyl monomer (b) is the same as the vinyl monomer (ii). However, in a layered product of the present invention, the vinyl monomer (b) used in an aromatic vinyl resin (II) may be the same as or different from the vinyl monomer (ii) used in the thermoplastic resin (I).

From the viewpoint of heat resistance, the aromatic vinyl resin (II) preferably comprises a repeating unit derived from a maleimide compound, and the content of the repeating unit derived from a maleimide compound is usually preferably 0-30 mass%, more preferably 1-30 mass%, further preferably 5-25 mass% and particularly preferably 5-20 mass% relative to 100 mass% of the aromatic vinyl resin (II). The repeating unit derived from a maleimide compound may be originated from the rubber-reinforced aromatic vinyl resin (II-1) or may be originated from the (co)polymer (II-2). The glass transition temperature of the aromatic vinyl resin (II) can be adjusted by the content of the repeating unit derived from the maleimide compound as mentioned later, and the (co)polymer (II-2) containing the repeating unit derived from the maleimide compound is advantageous for preparing the aromatic vinyl resin (II) provided with a desired glass transition temperature.

According to the preferable embodiments of the present invention, as the aromatic vinyl resin (II), is used an aromatic vinyl resin which comprises a rubber-reinforced aromatic vinyl resin (II-1) obtained by polymerization of a vinyl monomer (b) in the presence of a rubber-like polymer (a) selected from the group consisting of acrylic rubbers (i-3), silicone rubbers (i-4) and silicone/acrylic composite rubbers (i-5) and optionally a (co)polymer (II-2) of a vinyl monomer (b). Of these, preferable are a silicone/acrylic composite rubber-reinforced aromatic vinyl resin using a silicone/acrylic composite rubber (i-5) as the rubber-like polymer (b), and a mixture of a silicons rubber-reinforced aromatic vinyl resin using a silicone rubber (i-4) as the rubber-like polymer (b) and an acrylic rubber-reinforced aromatic vinyl resin using an acrylic rubber (i-3) as the rubber-like polymer (b), and particularly preferable is the silicone/acrylic composite rubber-reinforced aromatic vinyl resin.

The aromatic vinyl resin (II) can be obtained by known polymerisation methods such as emulsion polymerization method, suspension polymerization, solution polymerization, bulk polymerization and polymerization methods of combination of these.

The graft ratio of the rubber-reinforced aromatic vinyl resin (II-1) is preferably 20-170%, more preferably 50-170%, and furthermore preferably 50-150%. When the graft ratio is too low, flexibility may be insufficient. When the graft ratio is too high, viscosity of the aromatic vinyl resin (II) becomes high so that a thin product may be difficult to make.

The graft ratio can be measured by the same method as mentioned about the rubber-reinforced vinyl resin (I-1).

Meanwhile, the graft ratio can be adjusted by appropriately selecting, for example, kind and amount of a chain transfer agent used in the production of the rubber-reinforced aromatic vinyl resin (II-1), kind and amount of a polymerization initiator, method of addition and duration of addition of monomer components during polymerization, and polymerization temperature.

The limiting viscosity [η] (measured at 30˚C in methyl ethyl ketone) of the soluble matter in acetone (but acetonitrile when acrylic rubber is used) of the rubber-reinforced aromatic vinyl resin (II-1) is preferably 0.1 to 2.5 dl/g, more preferably 0.2 to 1.5 dl/g, and furthermore preferably 0.25 to 1.2 dl/g. It is preferable that the limiting viscosity is within this range from the viewpoint of thickness accuracy of layered products.

The limiting viscosity [η] can be measured in the same manner as the rubber-reinforced vinyl resin (I-1).

The limiting viscosity [η] can be adjusted by appropriately selecting, for example, kind and amount of a chain transfer agent used in the production of the rubber-reinforced aromatic vinyl resin (II-1), kind and amount of a polymerization initiator, method of addition and duration of addition of monomer components during polymerization, and polymerization temperature. Also, it can be adjusted by appropriately selecting and blending (co)polymers (II-2) different in limiting viscosity [η]. The limiting viscosity [η] of the (co)polymer (II-2) can be measured by the following method. First, the (co)polymer (II-2) is dissolved in methyl ethyl ketone to make five samples different in concentration. Then, the limiting viscosity [η] is obtained from the results of a reduced viscosity measured at each concentration at 30˚C using the Ubbelohde viscometer tube. The unit is dl/g.

The aromatic vinyl resin (II) may be pelletized by previously blending required amounts of the respective components, mixing the blend in a Henschel mixer or the like, and then melt-kneading it in an extruder, or may be processed into a film or sheet by directly supplying the respective components to a film or sheet forming machine. In this instance, antioxidants, ultraviolet absorbents, weather resistant agents, anti-aging agents, fillers, antistatic agents, flame retardants, antifogging agents, slipping agents, antibacterial agents, fungicides, tackifiers, plasticizers, coloring agents, graphite, carbon black, carbon nanotube, and pigments (including a pigment to which functionality such as an infrared absorbing or reflecting property is imparted) can be added to the aromatic vinyl resin (II) in an amount which does not impair the object of the present invention.

The glass transition temperature of the aromatic vinyl resin (II) is not particularly limited as long as it is lower than the glass transition temperature of the thermoplastic resin (I) of the base layer, but preferably 90-200˚C, more preferably 95-160˚C, furthermore preferably 95-150˚C and particularly preferably 110-140˚C. When the glass transition temperature of the aromatic vinyl resin (II) is higher than 200˚C, flexibility of layered products tends to deteriorate, and on the other hand, when the glass transition temperature is lower than 95˚C, heat resistance tends to be insufficient.

The glass transition temperature of the thermoplastic resin (I) (Tg (I)) of the base layer and the glass transition temperature of the aromatic vinyl resin (II) (Tg (II)) of the surface layer in the present invention preferably satisfy the following equation (2),

$$(Tg (I)-Tg (II)) \geqq 10°C \cdots (1)$$

more preferably the following equation (1')

$$50 \geqq (Tg (I)-Tg (II)) \geqq 10°C \cdots (1')$$

and furthermore preferably the following equation (1")

$$30 \geqq (Tg (I)-Tg (II)) \geqq 15°C \cdots (1'')$$

When the glass transition temperatures of the thermoplastic resin (I) and the aromatic vinyl resin (II) do not satisfy the equation (1), improvement effect of flexibility of the resulting layered product may be insufficient. When a difference between the glass transition temperature of the thermoplastic resin (I) (Tg (I)) and the glass transition temperature of the aromatic vinyl resin (II) (Tg (II)) is not less than 50˚C, the layered product tends to be difficult to produce.

The glass transition temperatures of the vinyl resin (I') and the aromatic vinyl resin (II) can be adjusted by appropriately selecting kind or amount of the rubber-like polymer (i) or (a) to be used, or kind or amount of the vinyl monomer (ii) or (b) to be used, and suitably by changing an amount, of the maleimide compound. Also, the glass transition temperature can be adjusted by blending an additive or filler such as a plasticizer and an inorganic filler.

In the layered product of the present invention, both of the thermoplastic resin (I) of a base layer and the aromatic vinyl resin (II) of a surface layer are preferably resin compositions which comprise a rubber-reinforced vinyl resin obtained by polymerization of a vinyl monomer (b, ii) in the presence of at least one rubber-like polymer (a, i) selected from the group consisting of acrylic rubbers (i-3), silicone rubbers (i-4) and silicone/acrylic composite rubbers. (i-5), and more preferably resin compositions which comprise a silicone/acrylic composite rubber graft copolymer obtained by polymerization of a vinyl monomer (b, ii) in the presence of a silicone/acrylic composite rubber (i-5) and contain a repeating unit derived from a maleimide compound, from the viewpoint of balance of weatherability, heat resistance, hydrolytic resistance and flexibility. In this case, from the viewpoint of balance of weatherability, heat resistance, hydrolytic resistance and flexibility, it is preferable that the silicone/acrylic composite rubber graft copolymer constituting the thermoplastic resin (I) of a base layer contains the rubber in an amount of 10-20 parts by mass relative to 100 parts by mass of the thermoplastic resin (I), and has a glass transition temperature of 150-160˚C with the content of N-phenyl maleimide unit being 15-30 mass% relative to 100 mass% of the thermoplastic resin (I) whilst the silicone/acrylic composite rubber graft copolymer constituting the aromatic vinyl resin (II) of a surface layer contains the rubber in an amount of 10-20 parts by mass relative to 100 parts by mass of the thermoplastic resin (II), and has a glass transition temperature of 130-140˚C with the content of N-phenyl maleimide unit being 5-15 mass% relative to 100 mass% of the thermoplastic resin (II).

The layered product of the present invention preferably satisfies a dimensional change (s) of 1%≧s≧-1% When left at 150˚C for 30 minutes. When the above condition of the dimensional change (s) is satisfied, layered products excellent in heat resistance can be obtained. The dimensional change (s) preferably satisfies 0.8%≧s≧-0.8%, more preferably 0.6%≧s≧-0.6% and particularly preferably 0.5%≧s≧-0.5% when left at 150˚C for 30 minutes. In order to allow the dimensional change (s) of the present layered product to satisfy 1%≧ s≧-1%, it is considered to increase heat resistance of the thermoplastic resin (I) used for a base layer. As a thermoplastic resin (I) constituting such a heat-resistant base layer, one having a glass transition temperature of not less than 120˚C is preferable.

The layered product of the present invention may be in a form of either sheet or film. For example, when the layered product of the present invention is a film, it can be produced by methods which can be utilized for producing a film of a thermoplastic resin, including, for example, solution cast method, melt extrusion method and melt press method. The melt extrusion method is excellent for a large scale production, but the solution cast method and melt press method are also useful for the purpose of a small scale or special application, or quality evaluation. In the melt extrusion method, T-die or inflation method is used. In the melt press method, calendar method is used. When the layered product of the present invention is a sheet, it can be produced by methods which can be utilized for producing a thermoplastic sheet, including, for example, coextrusion method.

T-die method has an advantage of high-speed production, and in that case, the temperature of resin during molding only has to be not less than the melting temperature and lower than the decomposition temperature of the resin, and generally an appropriate temperature is 150-250˚C.

Specifications and molding conditions of molding machine for the inflation method are not particularly limited, and conventionally known methods and conditions can be used. For example, the extruder has a caliber of 10-600 mm in diameter and a ratio L/D of 8-45 wherein D is the caliber, and L is a length L from the bottom of the hopper to the tip of cylinder. The dine has a shape generally used for inflation molding, for example, has a flow geometry of a spider type, spiral type or stacking type, and has a caliber of 1-5000 mm.

As the molding machine for calendar method, for example, any of tandem-type, L-type, reversed-L-type and z-type can be used.

Further, the layered product of the present invention can be produced, for example, by making a single-layer film by T-die or inflation molding and then subjecting it to heat or extrusion lamination, but from the viewpoint of production cost, a multi-layer T-die extruder is preferably used.

The thickness of the thus-obtained layered product of the present invention is, for example, in case of a film, usually 5-500 $\mu$m, and in case of a sheet, usually 0.5 mm-5 mm. When the thickness is less than 5 $\mu$m, film strength is insufficient leading to a break of the film in use, and on the other hand, when the thickness exceeds 5 mm, it may become difficult to process, or problems tend to arise such that flexibility of the sheet is lowered, or whiting occurs upon bending.

The layered product of the present invention only has to comprise a surface layer made of an aromatic vinyl resin (II) layered onto at least one side of a base layer made of a thermoplastic resin (I), but it preferably comprises a three-layer structure in which surface layers (A) and (C) made of the aromatic vinyl resin (II) are respectively layered on both sides of a base layer (B) made of the thermoplastic resin (I), because it provides excellent heat resistance, weatherability and flexibility, and hardly causes a warp (curl). The aromatic vinyl resin (II) of the surface layers (A) and (C) is not particularly limited as long as it has a glass transition temperature lower than the thermoplastic resin (I) of the base layer (B), and the resins forming the surface layers (A) and (C) may be the same or different.

In case of the layered product with a three-layer structure, the thickness of the layered product is preferably 30-500 $\mu$m, more preferably 40-450 $\mu$m and furthermore preferably 45-400 $\mu$m.

In case of the layered product with a three-layer structure, a ratio ($H_A/H_C$) of a thickness ($H_A$) of the above layer (A) to a thickness ($H_C$) of the above layer (C) preferably satisfies the following equation (2), more preferably the following equation (2'), and furthermore preferably the following equation (2").

$$0.5 \leq H_A/H_C \leq 1.5 \cdots (2)$$

$$0.6 \leq H_A/H_C \leq 1.4 \cdots (2')$$

$$0.7 \leq H_A/H_C \leq 1.3 \cdots (2'')$$

When the ratio ($H_A/H_C$) satisfies the above conditions, the layered product can be prevented from curling.

In case of the layered product with a three-layer structure, a ratio (($H_A+H_C$)/$H_B$) of the total of the thickness ($H_A$) of the above layer (A) and the thickness ($H_C$) of the above layer (C) to the thickness ($H_S$) of the above layer (B) preferably satisfies the following equation (3), and more preferably the following equation (3').

$$0.4 \leq (H_A+H_C)/H_B \leq 2.4 \cdots (3)$$

$$0.5 \leq (H_A+H_C)/H_B \leq 2.3 \cdots (3')$$

When the ratio $((H_A+H_C)/H_B)$ satisfies the above conditions, the layered product excellent in balance between heat resistance and flexibility can be obtained.

In case of the layered product with a three-layer structure, the thickness $(H_B)$ of the above layer (B) is preferably 10-300 $\mu$m and more preferably 30-250 $\mu$m. When the above layer (B) is too thin, heat resistance is insufficient, and when it is too thick, flexibility may be insufficient. Also, both of the thickness $(H_A)$ of the above layer (A) and the thickness $(H_C)$ of the above layer (C) are preferably 5-300 $\mu$m and more preferably 10-250 $\mu$m. When the above layers (A) and (C) are too thin, flexibility is inferior, and when they are too thick, heat resistance is inferior.

Further, for example, when the thickness of the whole layered product with a three-layer structure is 250 $\mu$m, the thicknesses of the above layer (A)/the above layer (B)/the above layer (C) is preferably 30-100/50-190/30-100 $\mu$m, more preferably 40-90/70-170/40-90 $\mu$m and further preferably 40-80/90-170/40-80 $\mu$m. When the thickness of the above layer (A) exceeds 100 $\mu$m, heat resistance tends to be insufficient, and on the other hand, when the thickness of the above layer (A) is less than 30 $\mu$m, flexibility of the layered product tends to be insufficient.

Further, for example, when the thickness of the whole layered product with a three-layer structure is 100 $\mu$m, the thicknesses of the above layer (A)/the above layer (B)/the above layer (C) is preferably 5-35/30-90/5-35 $\mu$m, more preferably 10-30/40-80/10-30 and further preferably 15-25/50-70/15-25 $\mu$m. When the thickness of the surface layer exceeds 35 $\mu$m, heat resistance tends to be insufficient, and on the other hand, when the thickness of the surface layer is less than 5 $\mu$m, flexibility of the layered film product tends to be insufficient.

The layered product of the present invention can be provided with a sticky layer or adhesive layer on at least one face of the surface layer (A) or (C) in order to improve adhesion onto a base layer (B) or obtain a sticky film, adhesive film, sticky sheet or adhesive sheet. A protective film can further be provided on a surface of a sticky layer or adhesive layer so as to protect these layers.

If required, another layer may be layered between a base layer (B) and a surface layer (A) or (C) of the layered product, which includes a decorative layer, and a layer made of a recycle resin (usually, a mixture of a thermoplastic resin (I) and a styrene resin (II)) generated during production, as long as the effect of the present invention is impaired.

The layered product of the present invention is suitable for office supplies such as tapes (including sticky tapes), films (including sticky films, laminate films and masking films); stationery such as pens and files; household appliances such as refrigerators, washing machines, drying machines, cleaners, electric fans, air conditioners, telephones, electric pots, rice cookers, dishwashers, dish dryers, microwave ovens, mixers, televisions, videos, stereo sets, tape recorders, clocks, computers, displays and calculators; automobile related members; medical instruments; optical devices; sporting goods; daily necessities; inner or outer films or sheets for various containers; wall paper; decorative paper; films alternative to decorative paper; flooring material; and others, and particularly suitable for films or sheets for solar cells such as back sheets for solar cells.

EXAMPLES

Hereinafter, the present invention will be described in more detail by way of Examples. However, the present invention is in no way restricted to the following Examples. The units "parts" and "%" in Examples and Comparative Examples are based on mass unless otherwise specified.

1. Evaluation method

The measurement methods of a variety of evaluation items in the following Examples and Comparative Examples are shown below.

(1) Heat resistance (shrinkage of a layered product after heating)

A square of 50 mm (MD) X 50 mm. (TD) was drawn on the center of a surface of a test piece of 100 mm (MD: extruding direction of a resin from T-die) X 100 mm (TD: vertical direction to MD) X 100 $\mu$m (thickness), and the test piece was heated and left at 150°C for 30 minutes in a thermostatic chamber, and then taken out to measure a dimensional change of each side in MD and TD directions of the above square of the test piece. The length after heating was taken as an average of the measured values of length of the respective sides in MD and TD directions of the above square. The shrinkage (s) was determined based on the following equation from the measured dimension before and after heating.

$$\text{Shrinkage (\%)} = \frac{(\text{Length after heating}) - (\text{Length before heating} : 50 \text{ mm})}{(\text{Length before heating} : 50 \text{ mm})} \times 100$$

According to the following criteria, heat resistance was evaluated from the shrinkage determined by the above equation. Meanwhile, the following shrinkage (s) shows a negative value when a test piece shrinks after heating and a positive value when a test piece expands after heating.

⊚:shrinkage (s) was -0.5%<s≦0% or 0≦s<0.5%.
○: shrinkage (s) was -1.0%<s≦-0.5% or 0.5≦s<1.0%.
✕: shrinkage (s) was s≦-1.0% or s≧1.0%.

(2) Weatherability

Metaling Weather Meter MV3000 (manufactured by Saga Test Instruments Co., Ltd. ) was used to perform an exposure test of a test piece of 50 mm (MD) X 30 mm (TD) X 100 $\mu$m (thickness) by repeating conditions of steps 1-4 shown below, and a color change value $\Delta E$ between before exposure and 100 hours after exposure was calculated. In the test, in case of the layered product, the face of a surface layer (A) of the layered product was exposed, and the color change was also measured on the face of the surface layer (A).

Step 1: irradiation 0.53 kW/m$^2$, 63˚C, 50%RH, 4 h
Step 2: irradiation+raining 0.53 kW/m$^2$, 63˚C, 95%RH, 1 min
Step 3: darkness 0 kW/m$^2$, 30˚C, 98%RH, 4 h Step 4: irradiation+raining 0.53 kW/m$^2$, 63˚C, 95%RH, 1 min
Lab (L: brightness, a: redness, b: yellowness) was measured using Spectrophotometer V670 (manufactured by JASCO Corporation), and $\Delta E$ was calculated by the next equation.

$$\Delta E = \sqrt{[(L_1-L_2)^2+(a_1-a_2)^2+(b_1-b_2)^2]}$$

wherein, $L_1$, $a_1$ and $b_1$ indicate values before exposure, and $L_2$, $a_2$ and $b_2$ indicate values after exposure. The smaller the $\Delta E$ value is, the smaller the color change is and the better the weatherability is. Evaluation standards are shown as follows.

○: $\Delta E$ is not more than 10.
✕: $\Delta E$ exceeds 10.

(3) Hydrolytic resistance

(3-1) Retention of fracture stress

A test piece of 150 mm (MD) X 15 mm (TD) X 100 $\mu$m (thickness) was cut out, and left under the condition with a temperature of 120˚C and a humidity of 100% for 100 or 200 hours, and then fracture stress of the test piece was measured in accordance with JIS K 7127 using an AG2000 tensile testing machine (manufactured by SHIMADZU CORPORATION). A distance between chucks at the time of sample setting was 100 mm and tensile rate was 300 mm/min. From the resulting measured values of fracture stress, retention of fracture stress was determined by the following equation.

$$\text{Retention of fracture stress (\%)} = \frac{\text{Fracture stress of test piece after leaving}}{\text{Fracture stress of test piece before leaving}} \times 100$$

Hydrolytic resistance was evaluated based on the obtained retention of fracture stress according to the following criteria. The higher the retention is, the better the hydrolytic resistance is.

○: retention of fracture stress exceeds 80%.
△: retention of fracture stress is 50-80%.
✕: retention of fracture stress is less than 50%.

(3-2) Retention of elongation

A test piece of 150 mm (MD) X 1.5 mm (TD) X 100 μm (thickness) was cut out, and left under the condition with a temperature of 120˚C and a humidity of 100% for 100 or 200 hours, and then fracture elongation of the test piece was measured in accordance with JIS K 7127 using an AG2000 tensile testing machine (manufactured by SHIMADZU CORPORATION). A distance between chucks at the time of sample setting was 100 mm and tensile rate was 300 mm/min. From the resulting measured values of fracture elongation, retention of elongation was determined by the following equation in the same manner.

$$\text{Retention of elongation (\%)} = \frac{\text{Fracture elongation of test piece after leaving}}{\text{Fracture elongation of test piece before leaving}} \times 100$$

Hydrolytic resistance was evaluated based on the obtained retention of elongation according to the following criteria. The higher the retention is, the better the hydrolytic resistance is.

○: retention of elongation exceeds 80%.
△: retention of elongation is 50-80%
✕ retention of elongation is less than 50%

(4) Flexibility (bending test)

A test piece of 100 mm (MD) X 100 mm (TD) X 100 μm (thickness) was bended along an axis of symmetry in MD direction, and then along an axis of symmetry in TD direction. A manual pressing roll (2000 g) was used to make two round trips on each crease of the bended test piece at a speed of 5 mm/sec in accordance with JIS Z0237. Then, the crease was unfolded to return to an original condition, and the condition of the test piece was visually observed. Criteria are shown bellow. In the test results, one having no crack of crease is excellent in flexibility.

◎: No crease cracked, and further bending and unfolding did not cause the crease to crack.
○: No crease was cracked, but further bending and unfolding caused the crease to crack.
✕: A crease cracked.

(5) Measurement of curl (deformation)

A test piece of 150 mm (MD) X 150 mm (TD) was cut out from the layered product, and was left under the condition with a temperature of 120˚C and a humidity of 100% for 100 hours, and then curl (deformation) of the test piece was visually observed and evaluated according to the following criteria. Meanwhile, in Comparative Examples 1-4, measurement was made in the same manner as above except using a single-layer product instead of the layered product.

○: no deformation.
△: a warp occurred on a film, but no winding occurred at the edge.
✕: a warp occurred, and winding occurred at the edge.

2. Method for producing a layered product

2-1. Thermoplastic resin and styrene resin

(1) ASA-1:

30 parts of "METABLEN SX-006 (trade name)" manufactured by MITSUBISHI RAYON CO., LTD. (a resin modifier which is an acrylonitrile-styrene copolymer grafted onto a silicone/acrylic composite rubber with a rubber content of 50%, a graft ratio of 80%: and a limiting viscosity [η] (at 30˚C in methyl ethyl ketone) of 0.38 dl/g), and 70 parts of "SAN-H (trade name)" (AS resin) manufactured by Techno Polymer Co., Ltd. were mixed together in a Henschel mixer, and then kneaded in a double-screw extruder (TEX44, manufactured by The Japan Steel Works, LTD., a barrel temperature of 270˚C) to obtain pellets. The resulting composition had a glass transition temperature (Tg) of 108˚C.

(2) ASA-2

30 parts of the above "METABLEN SX-006 (trade name)", 40 parts of "POLYIMILEX PAS1460 (trade name)" manufactured by NIPPON SHOKUBAI CO., LTD. (N-phenylmaleimide-acrylonitrile-styrene copolymer with an N-phenylmaleimide content of 40%) and 30 parts of the above "SAN-H (trade name)" were mixed together in a Henschel mixer, and then kneaded in a double-screw extruder (TEX44 (trade name), manufactured by The Japan Steel Works, LTD., a barrel temperature of 270˚C) to obtain pellets. The resulting composition had a rubber amount of 15 parts and a glass transition temperature (Tg) of 135˚C.

(3) ASA-3

30 parts of the above "METABLEN, SX-006 (trade name)", 62 parts of the above "POLYIMILEX PAS1460 (trade name)" (N-phenylmaleimide-acrylonitrile-styrene copolymer with an N-phenylmaleimeide content of 40%) and 8 parts of the above "SAN-H (trade name)" were mixed together in a Henschel mixer, and then kneaded in a double-screw extruder (TEX44 (trade name), manufactured by The Japan Steel Works, LTD., a barrel temperature of 270˚C) to obtain pellets. The resulting composition had a rubber amount of 1.5 parts and a glass transition temperature (Tg) of 155˚C.

(4) ASA-4

[Preparation of silicone rubber graft copolymer (b-1)]

1.3 parts of p-vinylphenylmethyldimethoxysilane and 98.7 parts of octamethylcyclotetrasiloxane were mixed, and placed in a solution of 2.0 parts of dodecylbenzene sulfonate in 300 parts of distilled water, and stirred with a homogenizer for 3 minutes to perform emulsification and dispersion. The mixture was poured into a separable flask equipped with a condenser, nitrogen introducing opening and stirred, and heated at 90˚C for 6 hours and maintained at 5˚C for 24 hours under stirring and mixing to complete condensation. The resulting polyorganosiloxane rubber-like polymer had a condensation ratio of 93%. This latex was neutralized to pH 7 with a sodium carbonate aqueous solution. The resulting polyorganosiloxane rubber-like polymer latex had an average particle diameter of 0.3 $\mu$m.
In a glass flask having an internal volume of 7 liters and equipped with a stirred, the ingredients for batch-polymerization comprising 100 parts of ion-exchanged water, 1.5 parts of potassium oleate, 0.01 part of potassium hydroxide, 0.1 part of t-dodecylmercaptane, 40 parts (as solid matter) of the above polyorganosiloxane latex, 15 parts of styrene and 5 parts of acrylonitrile were added thereto, and heated under stirring. When a temperature reached 45˚C, an activating solution comprising 0.1 part of ethylenediaminetetraacetic acid, 0.003 part of ferrous sulfate, 0.2 part of formaldehyde sodium sulfoxylate dihydrate and 15 parts of ion-exchanged water, and 0.1 part of diisopropylbenzene hydroperoxide was added, and reaction was continued for an hour.
Then, a mixture of incremental polymerization ingredients comprising 50 parts of ion-exchanged water, 1 part of potassium oleate, 0.02 part of potassium hydroxide, 0.1 part of t-dodecylmercaptane and 0.2 part of diisopropylbenzene hydroperoxide as well as the monomers of 30 parts of styrene and 10 parts of acrylonitrile was added continuously over 3 hours to continue the reaction. After the completion of addition, reaction was further continued for an hour under stirring, and then 0.2 part of 2,2-methylene-bis-(4-ethylene-6-t-butylphenol) was added thereto to obtain a polymer latex. Further, 1.5 parts of sulfuric acid was added to the above latex and allowed to coagulate at 90˚C, and dehydration, washing with water and drying were performed to obtain a silicone rubber graft copolymer (b-1) in a powder form. The graft ratio thereof was 84% and the limiting viscosity [η] (at 30˚C in methyl ethyl ketone) was 0.60 dl/g.

[Preparation of acrylic rubber graft copolymer (b-2)]

In a reaction vessel, 50 parts (as solid matter) of a latex with a solid content of 40% of an acrylic rubber-like polymer (with a volume average particle diameter of 100 nm and a gel content of 90%) obtained by emulsion polymerization of 99 parts of n-butyl acrylate and 1 part of allylmethacrylate was placed, and further 1 part of sodium dodecylbenzene sulfonate and 150 parts of ion-exchanged water were placed for dilution. Then, the inside of the reaction vessel was purged with nitrogen, 0.02 part of ethylenediaminetetraacetic acid disodium, 0.005 part of ferrous sulfate and 0.3 part of sodium formaldehyde sulfoxylate were added thereto, and heated to 60˚C under stirring.
On the other hand, in a vessel, 1.0 part of terpinolene and 0.2 part of cumene hydroperoxide were dissolved in 50 parts of a mixture of 37.5 parts of styrene and 12.5 acrylonitrile, and then the inside of the vessel was purged with nitrogen to obtain a monomer composition,
Next, the above monomer composition was polymerized at 70˚C whilst it was added to the above reaction vessel at a constant flow rate over 5 hours, to obtain latex. Magnesium sulfate was added to the latex to coagulate resinous components. Then, the resultant was washed with water and further dried to obtain an acrylic rubber graft copolymer (b-2). The graft ratio thereof was 93% and the limiting viscosity of [η] (at 30°C in methyl ethyl ketone) was 0.30 dl/g.

[Pelletization]

10 parts of the silicone rubber graft copolymer (b-1), 22 parts of the acrylic rubber graft copolymer (b-2), 62 parts of the "POLYIMILEX PAS1460 (trade name)" (N-phenylmaleimide-acrylonitrile-styrene copolymer, an N-phenylmaleimide content of 40%) and 6 parts of the "SAN-H (trade name)" were mixed together in a Henschel mixer, and then kneaded in a double-screw extruder (TEX 44 (trade name), The Japan Steel Works, LTD., a barrel temperature of 270°C) to obtain pellets. The resulting composition had a rubber amount of 15 parts and a glass transition temperature (Tg) of 15.5°C.

(5) ABS-1:

In a glass reaction vessel equipped with a stirrer, 75 parts of ion-exchanged water, 0.5 part of potassium rosinate, 0.1 part of t-dodecylmercaptane, 32 parts (as solid matter) of polybutadiene latex (average particle diameter: 270 nm, gel content: 90%), 8 parts of styrenebutadiene copolymer latex (styrene content: 25%, average particle diameter: 550 nm), 15 parts of styrene and 5 parts of acrylonitrile were placed, and the mixture was heated under nitrogen stream while stirring. When the inner temperature reached 45°C, a solution of 0.2 part of sodium pyrophosphate, 0.01 part of ferrous sulfate 7-hydrate and 0.2 part of glucose in 20 parts of ion-exchanged water was added thereto. Then, 0.07 part of cumene hydroperoxide was added to initiate polymerization, and polymerization was effected for one hour. Next, 50 parts of ion-exchanged water, 0.7 part of potassium rosinate, 30 parts of styrene, 10 parts of acrylonitrile, 0.05 part of t-dodecylmercaptane and 0.01 part of cumene hydroperoxide were added continuously for 3 hours. After polymerization was effected for one hour, 0.2 part of 2,2'-methylene-bis(4-ethylene-6-t-butylphenol) was added to terminate the polymerization. Magnesium sulfate was added to the latex to coagulate resinous components.
Then, the resultant was washed with water and further dried to obtain a polybutadiene graft copolymer (a). The graft ratio was 72%, and the limiting viscosity (η) of the acetone soluble matter was 0.47 dl/g.
40 parts of the polybutadiene graft copolymer (a) and 60 parts of the "POLYIMILEX PAS1460 (trade name)" (N-phenylmaleimide-acrylonitrile-styrene copolymer with an N-phenylmaleimide content of 40%) were mixed together in a Henschel mixer, and then kneaded in a double-screw extruder (TEX44 (trade name), The Japan Steel Works, LTD., a barrel temperature of 270°C) to obtain pellets. The resulting composition had a rubber amount of 15 parts and a glass transition temperature (Tg) of 155°C.

(6) ABS-2:

"ABS130 (trade name)" manufactured by Techno Polymer Co., Ltd. was used. The composition had a rubber amount of 15 parts, and a glass transition temperature was 105°C.

(7) PET:

"NOVAPEX GM700Z (trade name)" manufactured by Mitsubishi Chemical Corporation was used. It had a glass transition temperature (Tg) of 75°C.
Table 1 shows the rubber amount, the content of the repeating unit derived from N-phenylmaleimide (PMI content) and the glass transition temperature (Tg) of the resins described in the above (1) to (6).
Table 1

| | | ASA-1 | ASA-2 | ASA-3 | ASA-4 | ABS-1 | ABS-2 | PET |
|---|---|---|---|---|---|---|---|---|
| Thermoplastic Resin | Butadiene rubber-reinforced styrene resin (part) | - | - | - | - | 40 | - | - |
| | | - | - | - | - | - | 100 | - |
| | Silicone/acrylic composite rubber-reinforced styrene resin (part) | 30 | 30 | 30 | - | - | - | - |
| | Silicone rubber-reinforced styrene resin (part) | - | - | - | 10 | - | - | - |
| | Acrylic rubber-reinforced styrene resin (part) | - | - | - | 22 | - | - | - |
| | Styrene-acrylonitrile copolymer (part) | 70 | 30 | 8 | 6 | - | - | - |
| | N-phenylmaleimide-acrylonitrile-styrene copolymer (part) | - | 40 | 62 | 62 | 60 | - | - |
| | Polyethyleneterephthalate (part) | - | - | - | - | - | - | 100 |
| Evaluation Result | Rubber content (%) | 15 | 15 | 15 | 15 | 16 | 15 | - |
| | N-phenylmaleimide unit (%) | - | 12 | 24.8 | 24.8 | 24 | - | - |
| | Glass transition temperature (Tg) (°C) | 108 | 135 | 155 | 155 | 155 | 105 | 75 |

2-2. Method for producing a film or sheet

A film or sheet was produced by the following method.

First, a multi-layer film molding machine provided with T-die (die width; 1400 mm, lip distance; 0.5 mm) and three extruders with a screw diameter of 65 mm was provided, and the above pellets were supplied to the respective extruders as shown in Table 2 or 3 so that the resins were ejected at a melting temperature of 270°C from the T-die to produce a soft film. Then, the soft film was brought into surface-to-surface contact with a cast roll (roll surface temperature; 95°C) by air knife, and cooled and solidified to obtain a film or sheet. In this instance, by adjusting operation conditions of the extruders and cast roll, the thickness of the whole film or sheet and the respective thicknesses of layer (A)/layer (B)/ layer (C) were controlled to the values shown in Table 2 or 3. The evaluation results of the resulting films or sheets are shown in Tables 2 and 3.

Meanwhile, the above melting temperature was measured using a thermocouple thermometer. The thickness of the film was measured by cutting out a film one hour after the start of production of the film, and measuring a thickness at the center and each site at an interval of 10 mm from the center to both edges in the transverse direction of the film using a thickness gage (type "ID-C1112C" manufactured by Mitutoyo Corporation), and was taken as an average value thereof. Values measured at sites within a range of 20 mm from the film edges were omitted from the calculation of the above average value.

Table 2

| | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Layer structure | | Three layers | Three layers | Three layers | Three layers | Three layers | Three layers | Three layers | Three layers | Three layers | Three layers | Three layers | Three layers | Three layers | Two layers |
| Layer (A) | Material | ASA-2 | ASA-1 | ASA-2 | ASA-1 | ASA-1 | ASA-2 | ASA-2 | ASA-2 | Asia-2 | ASA-2 | ASA-2 | ASA-1 | ASA-2 | ASA-2 |
| | Tg (˚C) | 135 | 108 | 135 | 108 | 108 | 135 | 135 | 135 | 135 | 135 | 135 | 108 | 135 | 135 |
| | Thickness (μm) | 20 | 20 | 20 | 20 | 12 | 12 | 30 | 50 | 90 | 15 | 20 | 20 | 20 | 20 |
| Layer (B) | Material | ASA-3 | ASA-3 | ASA-4 | ASA-2 | ASA-3 | ASA-3 | ASA-4 | ASA-3 | ASA-3 | ASA-3 | ASA-3 | ASA-3 | ABS-1 | ASA-3 |
| | Tg (˚C) | 155 | 155 | 155 | 135 | 155 | 155 | 155 | 155 | 155 | 155 | 155 | 155 | 155 | 155 |
| | Thickness (μm) | 60 | 60 | 60 | 60 | 36 | 36 | 90 | 90 | 150 | 45 | 60 | 60 | 60 | 60 |
| Layer (C) | Material | ASA-2 | ASA-1 | ASA-2 | ASA-1 | ASA-1 | ASA-2 | ASA-2 | ASA-2 | ASA-2 | ASA-2 | ASA-2 | ASA-2 | ASA-2 | - |
| | Tg (˚C) | 135 | 108 | 135 | 108 | 108 | 135 | 135 | 135 | 135 | 135 | 135 | 135 | 135 | - |
| | Thickness (μm) | 20 | 20 | 20 | 20 | 12 | 12 | 30 | 50 | 90 | 15 | 30 | 20 | 20 | - |
| Thickness of the whole layered product (μm) | | 100 | 100 | 100 | 100 | 60 | 60 | 150 | 190 | 330 | 75 | 110 | 100 | 100 | 80 |
| Difference between Tg (I) of layer (B) and Tg (II) of layer (A) (˚C) | | 20 | 47 | 20 | 27 | 47 | 20 | 20 | 20 | 20 | 20 | 20 | 47 | 20 | 20 |
| Difference between Tg (I) of layer (B) and Tg (II) of layer (C) (˚C) | | 20 | 47 | 20 | 27 | 47 | 20 | 20 | 20 | 20 | 20 | 20 | 20 | 20 | - |
| $H_A/H_C$ | | 1.00 | 1.00 | 1.00 | 1.00 | 1.00 | 1.00 | 1.00 | 1.00 | 1.00 | 1.00 | 0.67 | 1.00 | 1.00 | - |
| $(H_A+H_C)/H_B$ | | 0.7 | 0.7 | 0.7 | 0.7 | 0.7 | 0.7 | 0.7 | 1.1 | 1.2 | 0.7 | 0.8 | 0.7 | 0.7 | - |
| Heat resistance | | ◎ | ○ | ◎ | ○ | ○ | ◎ | ◎ | ◎ | ◎ | ◎ | ◎ | ◎ | ◎ | ◎ |
| Flexibility (blending test) | | ◎ | ◎ | ○ | ◎ | ◎ | ◎ | ○ | ◎ | ◎ | ◎ | ◎ | ◎ | ◎ | △ |
| Weatherability | | ○ | ○ | ○ | ○ | ○ | ○ | ○ | ○ | ○ | ○ | ○ | ○ | △ | ○ |
| Curl deformation | | ○ | ○ | ○ | ○ | ○ | ○ | ○ | ○ | ○ | ○ | ○ | △ | ○ | △ |

(continued)

| Hydrolytic resistance | | | Example | | | | | | | | | | | | | |
| | | | 1 | 2 | 3 | 4 | 5 | 6 | 7 | 8 | 9 | 10 | 11 | 12 | 13 | 14 |
| | 100 hours later | Retention of fracture stress | ○ | ○ | ○ | ○ | ○ | ○ | ○ | ○ | ○ | ○ | ○ | ○ | ○ | ○ |
| | | Retention of elongation | ○ | ○ | ○ | ○ | ○ | ○ | ○ | ○ | ○ | ○ | ○ | ○ | ○ | ○ |
| | 200 hours later | Retention of fracture stress | ○ | ○ | ○ | ○ | ○ | ○ | ○ | ○ | ○ | ○ | ○ | ○ | ○ | ○ |
| | | Retention of elongation | ○ | ○ | ○ | ○ | ○ | ○ | ○ | ○ | ○ | ○ | ○ | ○ | ○ | ○ |

Table 3

| | | | Comparative Example | | | | | |
|---|---|---|---|---|---|---|---|---|
| | | | 1 | 2 | 3 | 4 | 5 | 6 |
| Layer structure | | | One layer | One layer | One layer | One layer | Two layers | Two layers |
| Layer (A) | | Material | - | - | - | - | ASA-1 | ASA-1 |
| | | Tg (˚C) | - | - | - | - | 108 | 108 |
| | | Thickness (μm) | - | - | - | - | 20 | 20 |
| Layer (B) | | Material | ASA-1 | ASA-3 | PET | ABS-2 | ABS-2 | PET |
| | | Tg (˚C) | 105 | 155 | 75 | 108 | 105 | 75 |
| | | Thickness (μm) | 100 | 100 | 100 | 100 | 60 | 60 |
| Layer (C) | | Material | - | - | - | - | - | - |
| | | Tg (˚C) | - | - | - | - | - | - |
| | | Thickness (μm) | - | - | - | - | - | - |
| Thickness of the whole layered product (μm) | | | 100 | 100 | 100 | 100 | 80 | 80 |
| Difference between Tg (I) of layer (B) and Tg (II) of layer (A) (˚C) | | | - | - | - | - | -3 | -33 |
| Difference between Tg (I) of layer (B) and Tg (II) of layer (C) (˚C) | | | - | - | - | - | - | - |
| Heat resistance | | | × | ○ | ○ | × | × | ○ |
| Flexibility (bending test) | | | ○ | × | ◎ | ○ | ◎ | ○ |
| Weatherability | | | ○ | ○ | ○ | × | ○ | ○ |
| Curl deformation | | | ○ | ○ | ○ | ○ | ○ | × |
| Hydrolytic resistance | 100 hours later | Retention of fracture stress | ○ | ○ | × | ○ | ○ | × |
| | | Retention of elongation | ○ | ○ | × | ○ | ○ | × |
| | 200 hours later | Retention of fracture stress | ○ | ○ | × | ○ | ○ | × |
| | | Retention of elongation | ○ | ○ | × | ○ | ○ | × |

The followings are clear from Tables 2 and 3. Examples 1-14 involving layered products, in which the base layer was made of a thermoplastic resin (I) having a Tg higher than 120˚C and a surface layer has a Tg lower than the thermoplastic resin (I), were excellent in heat resistance, weatherability, hydrolytic resistance and flexibility.
Comparative Example 1 involving a monolayer film of ASA-1 was inferior in heat resistance. Comparative Example 2 involving a monolayer film of ASA-3 was inferior in flexibility. Comparative Example 3 involving a monolayer film of PET was inferior it hydrolytic resistance. Comparative Example 4 involving a monolayer film of an ABS containing a butadiene rubber was inferior in heat resistance and weatherability. Comparative Example 5 involving a two-layer film, in which the base layer was ABS-2 and the surface layer was ASA-2, and the base layer had a lower glass transition temperature than the surface layer, was inferior in heat resistance and weatherability. Comparative Example 6 involving a two-layer film, in which a base layer was PET and the surface layer was ASA-1, caused curling deformation and was inferior in hydrolytic resistance.

Example 1 in which the styrene resin of the surface layer comprised N-phenylmaleimide was particularly excellent in heat resistance, compared to Example 2.

Example 1 in which the thermoplastic resin of the base layer comprised a silicone/acrylic composite rubber was particularly excellent in flexibility, compared to Example 3 which employed a silicone rubber and an acrylic rubber in combination.

INDUSTRIAL APPLICABIILTY

The layered product of the present invention is excellent in heat resistance, weatherability, hydrolytic resistance and flexibility, and also prevented from curling, and thus can be suitably utilized as molded articles in a form of various films and sheets which require these properties.

**Claims**

1. A layered product which comprises a base layer made of a thermoplastic resin (I) having a glass transition temperature of 120°C or higher, the base layer being layered on one side or both sides thereof with a layer made of an aromatic vinyl resin (II) having a lower glass transition temperature than the thermoplastic resin (I).

2. The layered product according to claim 1, wherein said aromatic vinyl resin (II) comprises a rubber-reinforced aromatic vinyl resin (II-1) obtained by polymerization of a vinyl monomer (b) comprising an aromatic vinyl compound and optionally another monomer copolymerizable with the aromatic vinyl compound in a presence of a rubber-like polymer (a), and optionally comprises a (co)polymer (II-2) of a vinyl monomer (b), the content of the rubber-like polymer (a) being 5-40 parts by mass relative to 100 parts by mass of the aromatic vinyl resin (II).

3. The layered product according to claim 2, wherein said rubber-like polymer (a) is at least one selected from the group consisting of conjugated diene rubbers, ethylene-$\alpha$-olefin rubbers, hydrogenated conjugated diene rubbers, acrylic rubbers, silicone rubbers and silicone/acrylic composite rubbers.

4. The layered product according to any one of claims 1 to 3, wherein said aromatic vinyl resin (II) comprises a repeating unit derived from a maleimide compound, the content of the repeating unit derived from a maleimide compound being 1-30 mass% relative to 100 mass% of the aromatic vinyl resin (II).

5. The layered product according to claim 4, wherein said thermoplastic resin (I) comprises a rubber-reinforced vinyl resin (I-1) obtained by polymerization of a vinyl monomer (ii) in a presence of a rubber-like polymer (i) and optionally a (co)polymer (I-2) of a vinyl monomer (ii), the content of the rubber-like polymer (i) being 5-40 parts by mass relative to 100 parts by mass of the thermoplastic resin (I).

6. The layered product according to claim 5, wherein said rubber-like polymer (i) is at least one selected from the group consisting of conjugated diene rubbers, ethylene-$\alpha$-olefin rubbers, hydrogenated conjugated diene rubbers, acrylic rubbers, silicone rubbers and silicone/acrylic composite rubbers.

7. The layered product according to claim 6, wherein said thermoplastic resin (I) comprises a repeating unit derived from a maleimide compound, the content of the repeating unit derived from a maleimide compound being 1-30 mass% relative to 100 mass% of the thermoplastic resin (I).

8. The layered product according to any one of claims 1 to 7, wherein said thermoplastic resin (1) has a glass transition temperature (Tg (I)) of 120-220°C, and said aromatic vinyl resin (II) has a glass transition temperature (Tg (II)) satisfying the following equation (1).

$$(Tg\ (I) - Tg\ (II)) \geqq 10°C \cdots (1)$$

9. The layered product according to any one of claims 1 to 8, wherein said base layer (B) made of the thermoplastic resin (I) is layered on both sides thereof with a layer ((A) and (C)) made of the aromatic vinyl resin (II).

10. The layered product according to claim 9, wherein, a thickness ($H_A$) of the layer (A), a thickness ($H_B$) of the layer (B) and a thickness ($H_C$) of the layer (C) satisfy the following equations (2) and (3).

$$0.5 \leqq H_A/H_C \leqq 1.5 \quad \cdots \quad (2)$$

$$0.4 \leqq (H_A+H_C)/H_B \leqq 2.4 \quad \cdots \quad (3)$$

11. The layered product according to claim 10, which shows a dimensional change (s) represented by $1\% \geqq s \geqq -1\%$, when left at 150°C for 30 minutes is.

12. The layered product according to any one of claims 1 to 11, which is in a form of a sheet or film.

**INTERNATIONAL SEARCH REPORT**

| International application No. |
| --- |
| PCT/JP2008/063584 |

A. CLASSIFICATION OF SUBJECT MATTER
*B32B27/30(2006.01)i, C08L51/04(2006.01)i*

According to International Patent Classification (IPC) or to both national classification and IPC

B. FIELDS SEARCHED

Minimum documentation searched (classification system followed by classification symbols)
B32B27/30, C08L51/04

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 11-277689 A  (Nippon Shokubai Co., Ltd.),<br>12 October, 1999 (12.10.99),<br>Claims 1, 2, 5; Par. Nos. [0010], [0030],<br>[0046] to [0053]<br>(Family: none) | 1,8-12<br>2-7 |
| Y<br>A | JP 2001-294722 A  (Nippon Shokubai Co., Ltd.),<br>23 October, 2001 (23.10.01),<br>Claim 1; Par. Nos. [0018] to [0021], [0088]<br>(Family: none) | 2-7<br>1,8-12 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 October, 2008 (21.10.08) | Date of mailing of the international search report<br>04 November, 2008 (04.11.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

| | INTERNATIONAL SEARCH REPORT | International application No. |
|---|---|---|
| | | PCT/JP2008/063584 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 63-243156 A  (Japan Synthetic Rubber Co., Ltd.),<br>11 October, 1988 (11.10.88),<br>Claim 1; page 2, lower right column, line 9 to page 3, upper left column, line 8; page 3, upper right column, line 14 to lower left column, line 17<br>(Family: none) | 2-7<br>1,8-12 |
| Y<br>A | JP 61-179252 A  (Mitsubishi Rayon Co., Ltd.),<br>11 August, 1986 (11.08.86),<br>Full text<br>(Family: none) | 2-7<br>1,8-12 |
| A | JP 2002-46224 A  (Denki Kagaku Kogyo Kabushiki Kaisha),<br>12 February, 2002 (12.02.02),<br>Claim 1; Par. Nos. [0007] to [0021]<br>(Family: none) | 1-12 |
| A | JP 2005-248138 A  (Techno Polymer Co., Ltd.),<br>15 September, 2005 (15.09.05),<br>Claims 1, 2; Par. Nos. [0008] to [0058]<br>(Family: none) | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007070430 A
- JP 2006175764 A
- JP 2006306910 A
- US 2891920 A
- US 3294725 A
- JP H04239010 A
- JP 2137934 B